## Europäisches Patentamt

### European Patent Office

### Office européen des brevets

(11) Veröffentlichungsnummer: **0 237 473**
**B1**

(12) **EUROPÄISCHE PATENTSCHRIFT**

(45) Veröffentlichungstag der Patentschrift:
09.05.90

(21) Anmeldenummer: 87810070.0

(22) Anmeldetag: 05.02.87

(51) Int. Cl.⁵: **F16K 31/60,** F16K 11/00,
F16K 11/074

(54) Betätigungsanordnung in einer Einhebelmischarmatur.

(30) Priorität: 07.02.86 CH 497/86

(43) Veröffentlichungstag der Anmeldung:
16.09.87 Patentblatt 87/38

(45) Bekanntmachung des Hinweises auf die Patenterteilung:
09.05.90 Patentblatt 90/19

(84) Benannte Vertragsstaaten:
AT CH DE FR IT LI NL SE

(56) Entgegenhaltungen:
DE-A- 3 202 392
DE-A- 3 219 574
FR-A- 2 515 772
GB-A- 2 108 634
US-A- 3 433 264
US-A- 3 680 592

(73) Patentinhaber: **Armaturenfabrik Wallisellen AG,
Richtistrasse 2, CH-8304 Wallisellen(CH)**

(72) Erfinder: **Egli, Werner, Dipl.-Ing. ETH, Burgstrasse 61,
CH-8193 Eglisau(CH)**

(74) Vertreter: **White, William et al, Isler AG
Patentanwalts-Bureau Walchestrasse 23,
CH-8006 Zürich(CH)**

ACTORUM AG

## Beschreibung

Die vorliegende Erfindung betrifft eine Betätigungsanordnung in einer Einhebelmischarmatur nach dem Oberbegriff des unabhängigen Patentanspruchs I.

Bei modernen Ventiloberteilen wird die Durchflussmenge mittels geschliffener Keramikscheiben geregelt. Dabei ist eine Scheibe feststehend im Gehäuse gehalten und die zweite Scheibe ist als Steuerscheibe zumindest drehbeweglich angeordnet und ist bewegungsstarr mit dem Betätigungsorgan verbunden.

Gemäss der US-A 3 433 264 ist es bekannt, solche Keramikscheiben auch für Mischarmaturen zu verwenden. Dazu weist die feste Scheibe drei axiale Durchgangsbohrungen auf, nämlich eine für den Kaltwasserzufluss, eine für den Warmwasserzufluss und eine für den Mischwasserabfluss. Die Steuerscheibe hat demgegenüber nur eine Verbindungsausnehmung, die auch durchgehend ausgebildet sein kann und diese Ausnehmung weist eine Steuerkante auf, derart, dass durch eine Drehung der Steuerscheibe die beiden Zuflussbohrungen in komplementärer Weise geöffnet bzw. geschlossen werden können, um so das Mischungsverhältnis von Kalt- zu Warmwasser einzustellen. Durch eine translatorische Verschiebung der Steuerkante, so dass sie parallel zu sich selbst verschoben wird, können die Durchflussmengen bei gleichem Mischungsverhältnis eingestellt werden.

Bei solchen Mischbatterien besteht ein Problem darin, beide Einstellungen mit nur einem Betätigungsorgan vorzunehmen. In der DE-A 3 219 574 wurde vorgeschlagen, mittig in der Aussenhülse des Steuereinsatzes einen Exzenterlagerkörper vorzusehen, der in eine Längsnut in einem Druckstück bzw. in der Steuerscheibe selbst eingreift. Dieser Körper steht anderseits in Wirkverbindung mit einem Arm eines vom Bedienungshebel betätigten Winkelhebels. Durch Drehen des Bedienungshebels um die Achse des Steuereinsatzes wird die Steuerscheibe rotiert und damit das Mischungsverhältnis eingestellt und durch Auf- und Abschwenken des Bedienungshebels wird die Steuerscheibe in der eingestellten Drehlage translatorisch verschoben.

Eine Vereinfachung bezüglich der Bewegungsübertragung vom Hebel auf die Steuerscheibe ist in der FR-A 2 515 772 beschrieben. Im Steuereinsatz ist eine zylindrisch geformte Steuerwelle in einem Führungsteil drehbar gelagert. Ein kugelig ausgebildeter Steuerstift ist im Kugelbereich diagonal durchbohrt und in diese Bohrung ist die Steuerwelle eingesetzt. Senkrecht zu dieser Bohrung trägt der Steuerstift einen oberen Betätigungshebel und einen unteren Betätigungskopf, der in die zentrale Ausnehmung eines mit der Steuerscheibe dreh- und verschiebestarr verbundenen Verbindungsstückes eingreift. Ein Problem bei einer solchen Anordnung bilden die Dichtungen. So muss die kugelige Aussenfläche des Steuerstiftes gegenüber einer aufgeschraubten Kappe abgedichtet werden, so dass diese Dichtung an der bewegungsintensivsten Stelle liegt und daher einem starken Verschleiss untersteht.

Sowohl bei der vorgenannten wie bei dieser letztgenannten Veröffentlichung ist die Lage des Bedienungshebels fest vorgegeben. Eine Voreinstellung von höchster Temperatur und/oder grösster Durchflussmenge ist nur durch Demontage der Kartusche oder wenigstens der Bedienungsorgane möglich, weil die empfindlichen Gelenkstellen und Reibungsflächen nicht jedermann zugänglich sein dürfen.

Es ist deshalb eine Aufgabe der Erfindung eine Betätigunganordnung zu schaffen, bei der neben der Gelenkverbindung mit der Steuerscheibe keine weiteren Gelenkstellen benötigt werden, so dass wenigstens die Temperatureinstellung zugänglich gemacht werden kann. Ueberdies soll der Bedienungshebel bezüglich der Kartusche in seiner Winkellage einstellbar sein.

Erfindungsgemäss wird dies durch die Merkmale im kennzeichnenden Teil des unabhängigen Patentanspruchs erreicht.

Ausführungsbeispiele der Erfindung werden nachfolgend an Hand der Zeichnung erläutert. Es zeigen:

Fig. I eine Frontalansicht einer Steuerkartusche nach der Erfindung für ein Mischventil,
Fig. 2 Eine Schnittansicht nach der Schnittlinie II-II in Fig. I,
Fig. 3 eine Ansicht einer andern Ausführungsform des Bedienungshebels,
Fig. 4 eine Draufsicht auf die Drehwinkelbegrenzung bei entfernter Kappe,
Fig. 5 eine Ansicht eines Einlochmischers von der Seite, und
Fig. 6 eine gleiche Ansicht wie Fig. 5 aber eines Wandmischers.

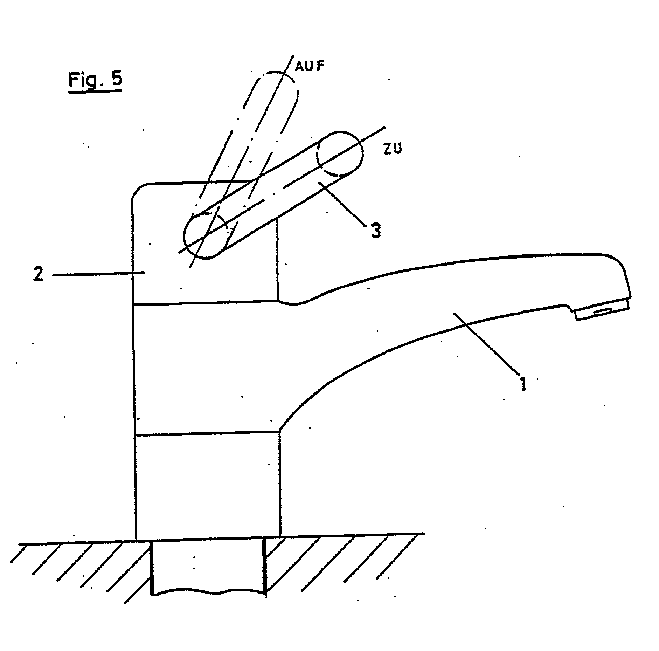

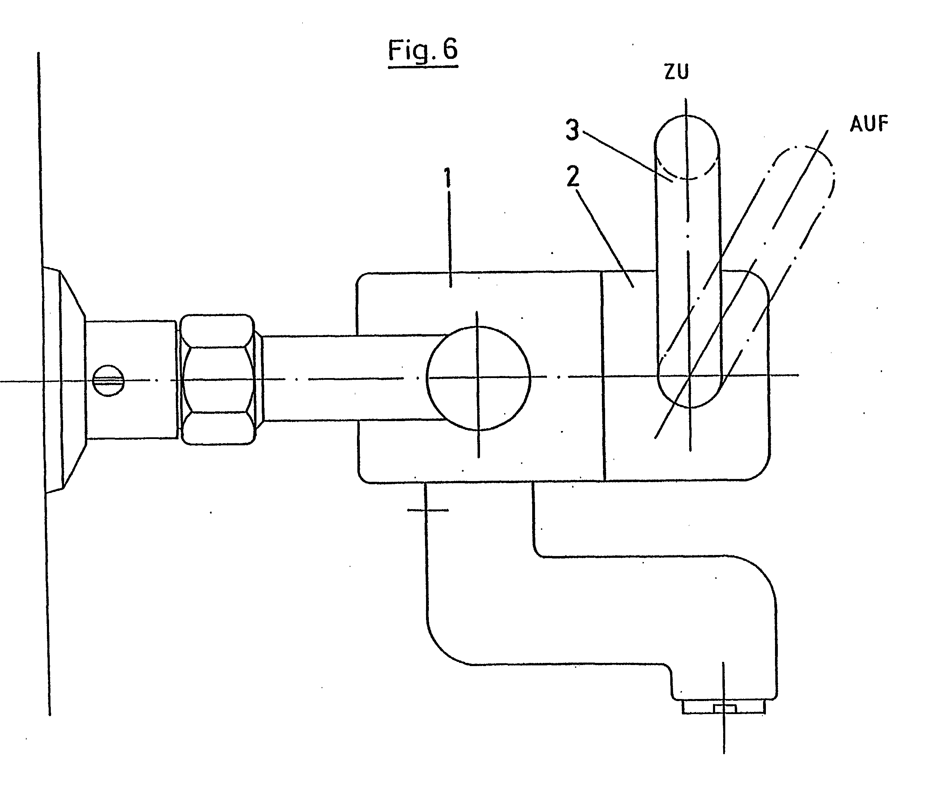

Fig. I und 2 zeigen die Kartusche für ein Mischventil. Das Gehäuse I kann für einen Wandmischer nach Fig. 6 oder für einen Einlochmischer nach Fig. 5 ausgebildet sein. In beiden Fällen wird dieselbe Kartusche 2 eingebaut. Als Betätigungshebel ist ein das Gehäuse I umfassender Bügel 3 vorgesehen, der um die Achse 4 einer Steuerwelle 5 schwenkbar ist.

Die Steuerwelle 5 ist in einer radialen Durchgangsbohrung 46 eines in das Gehäuse 32 drehbar eingesetzten Führungsteils 43 angeordnet und reicht bis wenigstens angenähert zur Mantelfläche des Gehäuses 32 hinaus. In einer radialen etwa mittig in der Steuerwelle 5 angeordneten Steuerbohrung 47 befindet sich ein Steuerstift I5 dessen eines Ende als Kugelkalotte ausgebildet ist und damit in eine Pfanne I7 in einem Verbindungsstück I8 eingreift.

Das andere Endteil des Steuerstiftes I5 befindet sich in einer schlitzartigen Ausnehmung 4I mit zwei Anschlagflächen 42 beidseitig des Schwenkweges. Das Verbindungsstück I8 seinerseits ist mit der beweglichen Steuerscheibe 20 dreh- und verschiebestarr verbunden. Dies kann beispielsweise mittels drei auf dem Umfang angeordneten Nocken, einem Verbindungsstück I8 und entsprechenden Ausnehmungen in der Steuerscheibe 20 bewirkt sein. Damit werden sowohl die Drehbewegung zur komplementären Einstellung der Oeffnungen 23, 24 für Kalt- und Warmwasser in der feststehenden Scheibe 22 als auch die Parallelverschiebung zur Vergrösserung oder Verkleinerung der beiden genannten Oeffnungen 23, 24 spielfrei übertragen, so dass an der Auslauföffnung 25 in der feststehenden Scheibe 22 die gewünschte Menge Wasser mit gewünschter Temperatur erhältlich ist.

Die Enden der Steuerwelle 5 liegen wie erwähnt im Gebiet der Mantelfläche des Gehäuses 32 und tragen eine Kerbverzahnung 6. Aufsteckhülsen 7 mit einer gleichartigen Kerbverzahnung 6 sind auf die Enden der Steuerwelle 5 aufgesteckt. Die Hülsen 7 haben aussenseitig einen Flansch, der mit zwei parallelen Flächen 8 als Führungsnocken für Nuten 9 im Bedienungsbügel 3 versehen ist. Von aussen her sind Schrauben II in den Hülsenboden I2 eingeschraubt. Durch Herausschrauben stehen die Köpfe in je eine Bohrung I4 im Bedienungsbügel 3 vor, der damit nicht abgezogen werden kann. Erst wenn die Schrauben eingeschraubt sind und damit deren Köpfe nicht mehr bis in die Bohrung I4 vorstehen, kann der Bedienungsbügel 3 abgezogen werden.

Wenn dann die Hülsen 7 abgezogen werden, können sie in einer andern relativen Lage wieder auf die Steuerwelle 5 aufgesetzt werden, die mit nur durch die Teilung der Kerbverzahnung festgelegten Schritten erfolgen kann. Damit wird die relative Lage der Flächen 8 zur Achse des Steuerstiftes I5 und damit natürlich auch zum Gehäuse 32 verändert und diese wiederum ergibt eine andere Lage des Bedienungsbügels bezüglich des Gehäuses.

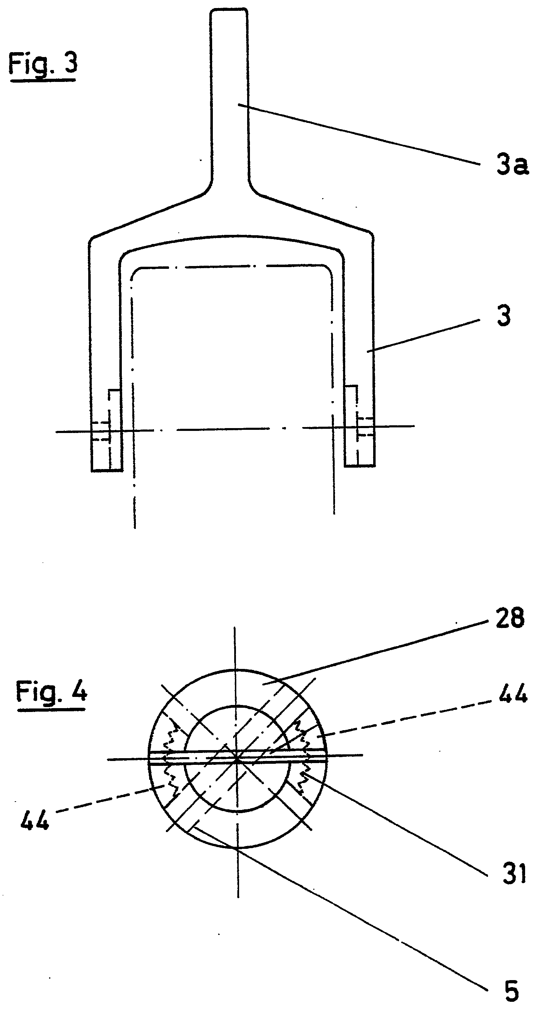

Während in Fig. I und 2 ein Bügel 3 für die Bedienung vorgesehen ist, könnte gemäss Fig. 3 noch ein kurzer Hebelarm 3a am Bügel 3 angesetzt sein, wenn dies vom Komfort her erwünscht ist. Mit der vorgesehenen Ausführungsform der Befestigung des Bügels kann natürlich auch ebenso leicht der Bügel ausgewechselt, wie dessen Lage bezüglich des Gehäuses eingestellt werden.

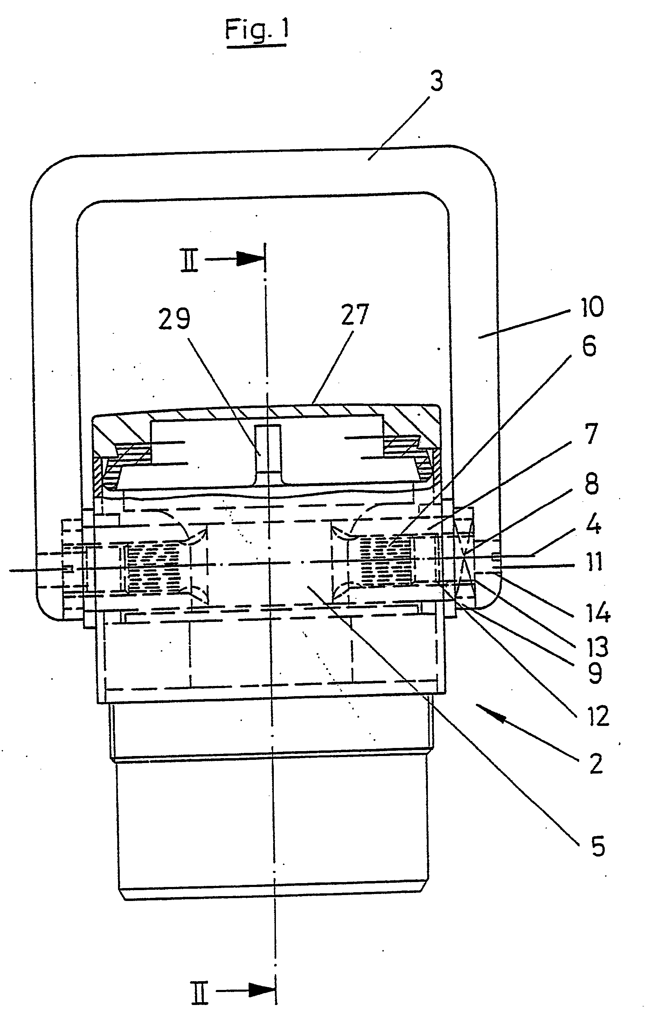

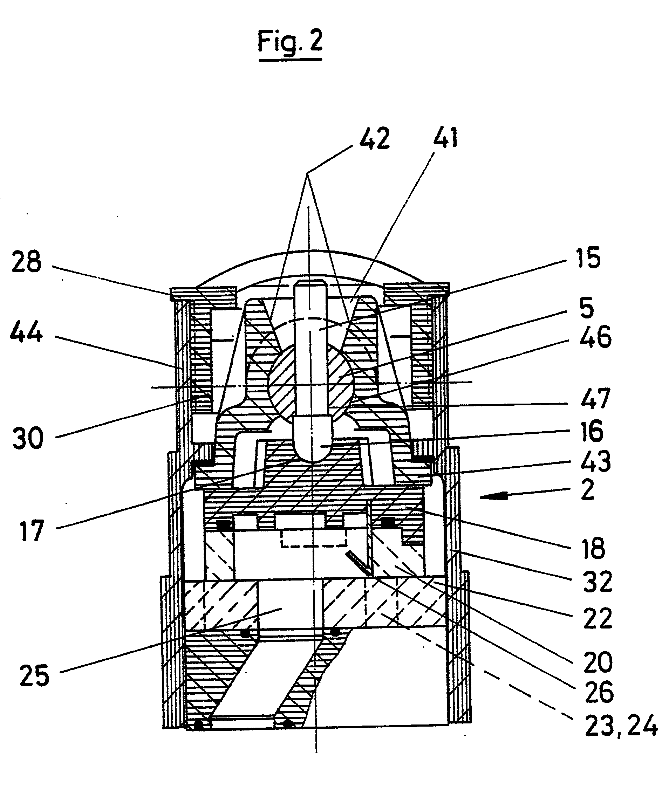

Zur Einstellung des Drehwinkels des Führungsteils 43 innerhalb des Gehäuses 32 weist das Gehäuse 32 zwei sich diagonal gegenüberliegende axiale Lappen 44 auf (Fig. 4). Ein Steckelement 28 (Fig. 2) ist ebenfalls mit zwei sich diagonal gegenüberliegend angeordneten Begrenzungsteilen 30 versehen. Sowohl die Lappen 44 als auch die Begrenzungsteile 30 sind an den sich berührenden Flächen mit axialer Kerbverzahnung 3I versehen, so dass durch entsprechendes Aufstecken des Steckelementes 28 auf die Lappen 44 der Zwischenraum zwischen diesen Lappen 44 mittels der Begrenzungsteile 30 verkleinert werden kann, wodurch der freie Drehwinkel für die Enden der Steuerwelle 5 nach Wunsch einstellbar ist um so den Temperaturbereich für das Mischwasser zu begrenzen.

Der Steuerstift I5 liegt mit dem einen Endteil in einer nach oben offenen Ausnehmung 4I. Durch Veränderung des Abstandes der Anschlagflächen 42 mittels eines Steckteils könnte auch die Durchflussmenge verkleinert werden.

Da sowohl das Steckelement 28 wie auch ein Steckteil von oben her zugänglich sind, genügt es, wenn die Kappe 27 als Verschluss für die Oeffnung im Gehäuse I entfernbar ausgestaltet ist.

## Patentansprüche

1. Betätigungsanordnung in einer Einhebelmischarmatur mit einer in einem Gehäuse (32) angeordneten feststehenden Scheibe (22) mit Oeffnungen (23, 24, 25) für Kalt- und Warmwasserzufluss und Mischwasserabfluss und mit einer dieser gegenüber drehbaren und translatorisch verschiebbaren Steuerscheibe (20), ferner mit einem drehbar gehalterten Führungsteil (43), der drehstarr mit einem mit der Steuerscheibe (20) dreh- und verschiebestarr verbundenen Verbindungsstück (18) verbunden ist, wobei im Führungsteil (43) eine Steuerwelle (5) drehbar gelagert ist, deren Enden bis wenigstens angenähert zur Mantelfläche des Gehäuses (32) vorstehen und ein Steuerstift (15) mit der Steuerwelle (5) starr verbunden ist und mit seinem einen Ende (16) in eine Ausnehmung (17) im Verbindungsstück (18) eingreift, dadurch gekennzeichnet, dass zur Begrenzung des Temperaturbereiches das Gehäuse (32) zwei sich diagonal gegenüberliegende axiale Lappen (44) mit innerer axialer Kerbverzahnung (31) aufweist, in die ein den Drehwinkel der Steuerwelle (5) um die vertikale Achse begrenzendes Steckelement (28) mit äusserer Kerbverzahnung einsteckbar ist, dass ferner das Gehäuse (32) als Kartusche ausgebildet ist, aus der das nach innen abgedichtete Führungsteil (43) nach oben herausragt und dass die Enden der Steuerwelle (5) axiale Kerbverzahnungen (6) tragen, auf die Aufsteckhülsen (7) mit gleichartiger Kerbverzahnung aufsteckbar sind, die aussen mit Führungsnocken (18) für einen Bedienungsbügel (3) versehen sind.

2. Anordnung nach Patentanspruch 1, dadurch gekennzeichnet, dass zur einstückigen Verbindung von Hülsen (7) und Bügel (3) Schrauben (11) vorhanden sind, die durch Herausschrauben zum Eingriff in Bohrungen (14) im Bügel (3) bestimmt sind.

3. Anordnung nach Patentanspruch 1 oder 2, dadurch gekennzeichnet, dass der Steuerstift (15) eine Kugelkalotte (16) trägt und das Verbindungsstück (18) mit einer entsprechenden Pfanne (17) ausgerüstet ist.

4. Anordnung nach Patentanspruch 3, dadurch gekennzeichnet, dass zur Begrenzung der Verschiebebewegung der Steuerstift (15) über die Steuerwelle (5) hinaus verlängert ist und dass im Führungsteil (43) eine schlitzartige Ausnehmung (41) mit zwei Anschlagflächen (42) vorhanden ist.

5. Anordnung nach Patentanspruch 1, dadurch gekennzeichnet, dass das Gehäuse (32) mit einem axial in die obere Oeffnung einsteckbaren Deckel (27) verschliessbar ist und dass das Steckelement (28) nach Entfernen dieses Deckels (27) frei zugänglich ist.

6. Anordnung nach einem der Patentansprüche 1 bis 5, dadurch gekennzeichnet, dass in dem als Kartusche ausgebildeten Gehäuse (32) sämtliche Ventilteile (20, 22) und deren Steuermittel (5, 15, 18, 43) unverlierbar gehalten sind.

## Claims

1. Operating arrangement in a single-lever mixer tap with a stationary disc (22) arranged in a housing (32) and comprising openings (23, 24, 25) for the inflow of cold and hot water and the discharge of mixed water and with a control disc (20) which is able to rotate with respect thereto and is able to move by translation, furthermore with a guide part (43) mounted in a rotary manner, which is connected in a non-rotary manner to a connecting member (18) connected to the control disc (20) so that it is unable to rotate and slide, a control shaft (5) being mounted to rotate in the guide part (43), the ends of which shaft project as far as at least approximately the surface of the housing (32) and a control pin (15) is rigidly connected to the control shaft (5) and engages by one end (16) in a recess (17) in the connecting member (18), characterised by the fact that in order to restrict the temperature range, the housing (32) comprises two diagonally opposed, axial tongues (44) with internal, axial serrations (31), into which a plug member (28) with external serrations limiting the angle of rotation of the control shaft (5) about the vertical axis can be inserted, that furthermore the housing (32) is constructed as a cartridge, from which the inwardly sealed guide part (43) projects upwards and that the ends of the control shaft (5) comprise axial serrations (6), on which slip-on sleeves (7) with similar serrations can be fitted, which are provided externally with guide cams (8) for an operating handle (3).

2. Arrangement according to Patent claim 1, characterised in that screws (11) are provided for the one-piece connection of sleeves (7) and handle (3), which screws by unscrewing are intended for engagement in bores (14) in the handle (3).

3. Arrangement according to Patent claim 1 or 2, characterised in that the control pin (15) supports a spherical segment (16) and the connecting member (18) is equipped with a corresponding seat (17).

4. Arrangement according to Patent claim 3, characterised in that for limiting the sliding movement, the control pin (15) is extended beyond the control shaft (5) and that provided in the guide part (43) is a slot-like recess (41) with two abutment surfaces (42).

5. Arrangement according to Patent claim 1, characterised in that the housing (32) can be closed off by a cover (27) able to be inserted axially in the upper opening, and that the plug member (28) is freely accessible after removing this cover (27).

6. Arrangement according to one of Patent claims 1 to 5, characterised in that in the housing (32) constructed as a cartridge, all the valve parts (20, 22) and their control means (5, 15, 18, 43) are mounted in an undetachable manner.

## Revendications

1. Dispositif de commande dans un robinet mélangeur à monocommande comportant un disque fixe (22), disposé dans un carter (32), avec des ouvertures (23, 24, 25) pour l'arrivée d'eau froide et l'arrivée d'eau chaude et pour le départ de l'eau mélangée, comportant aussi un disque (20) de manœuvre qui peut tourner et coulisser en translation par rapport au disque fixe, et comportant aussi une pièce (43) de guidage qui est fixe, mais avec possibilité de rotation, et qui est reliée, sans liberté de rotation relative, avec une pièce (18) de liaison elle-même reliée, sans liberté de rotation ni de coulissement, au disque (20) de manœuvre, étant précisé que dans la pièce (43) de guidage tourillonne un arbre (5) de manœuvre dont les extrémités dépassent jusqu'au moins approximativement la surface latérale du carter (32) et qu'une tige (15) de manœuvre est rigidement reliée à l'arbre (5) de manœuvre et, par l'une de ses extrémités (16), vient en prise dans un évidement (17) prévu dans la pièce (18) de liaison, caractérisé en ce que, pour limiter la plage de température, le carter (32) présente deux oreilles (44) axiales, qui sont situées diagonalement l'une en face de l'autre, présentent une denture (31) intérieure à cannelures axiales et dans lesquelles peut s'enficher, par une denture à cannelures extérieures, un élément (28) enfichable, qui limite l'angle de rotation de l'arbre (5) de manœuvre autour de l'axe vertical; en ce qu'en outre le carter (32) a la forme d'une cartouche, de laquelle sort vers le haut la pièce (43) de guidage rendue étanche vers l'intérieur; et en ce que les extrémités de l'arbre (5) de manœuvre portent des cannelures axiales (6) sur lesquelles peuvent s'enficher, par une denture à cannelures identiques, des douilles (7) enfichables, qui présentent extérieurement des surfaces (18) de guidage pour un étrier (3) de commande.

2. Dispositif selon la revendication 1, caractérisé en ce que, pour relier solidairement les douilles (7) et l'étrier (3), sont prévues des vis (11) qui, lorsqu'on les dévisse, sont destinées à venir en prise dans des perçages (14) prévus dans l'étrier (3).

3. Dispositif selon la revendication 1 ou 2, caractérisé en ce que la tige (15) de manœuvre porte une calotte sphérique (16) et que la pièce (18) de liaison présente une rotule femelle (17) correspondante.

4. Dispositif selon la revendication 3, caractérisé en ce que pour limiter le mouvement de coulissement, la tige (15) de manœuvre se prolonge au-delà de l'arbre (5) de manœuvre, et en ce que, dans la pièce (43) de guidage, est prévu un évidement (41) en forme de fente, présentant deux surfaces (42) de butée.

5. Dispositif selon la revendication 1, caractérisé en ce que le carter (32) peut être obturé avec un couvercle (27), qui peut s'enficher axialement dans l'ouverture supérieure, et en ce que l'élément (28) enfichable est librement accessible après dépose de ce couvercle (27).

6. Dispositif selon l'une des revendications 1 à 5, caractérisé en ce que, dans le carter (32) en forme de cartouche, sont maintenus, de façon imperable, toutes les pièces (20, 22) du robinet et leurs moyens de manœuvre (5, 15, 18, 43).

Fig. 1

## Fig. 2

Fig. 3

3a

3

Fig. 4

28

44

44

31

5

Fig. 5

AUF

ZU

3

2

1

Fig. 6

AUF

ZU